# EUROPEAN PATENT SPECIFICATION

(11) **EP 3 845 317 B1**
(45) Date of publication and mention of the grant of the patent: **14.09.2022**
(21) Application number: 20217906.5
(22) Date of filing: 30.12.2020
(51) Int. Cl.: B06B 1/02, B23K 20/10, B29C 65/00

(54) **ELECTRONIC DEVICE FOR DRIVING AND CONTROLLING A VIBRATING UNIT OF AN ULTRASONIC WELDING MACHINE**
ELEKTRONISCHES GERÄT FÜR DAS ANTREIBEN UND DIE STEUERUNG EINES RÜTTLERS VON EINER ULTRASCHALL-SCHWEISSMASCHINE
APPAREIL ÉLECTRONIQUE POUR ALIMENTER ET CONTROLER UNE UNITÉ DE VIBRATION D'UNE MACHINE DE SOUDER À ULTRASONS

(30) Priority: 31.12.2019 IT 201900025810
(43) Date of publication of application: 07.07.2021
(73) Proprietor: Sonic Italia S.r.l., 20017 Rho (MI) (IT)
(72) Inventor: COLUCCI, Gabriele, 20017 Rho, MILANO (IT)
(74) Representative: Pennacchio, Salvatore Giovanni

(56) References cited:
- EP-A2- 1 216 760
- CN-B- 101 574 757
- CN-U- 205 615 000
- US-A- 5 425 704

## Description

### TECHNOLOGICAL BACKGROUND OF THE INVENTION

### Field of application

The present invention relates, in general, to systems and methods for the ultrasonic welding, in particular of thermoplastic materials. In particular, the invention relates to an electronic device for driving and controlling a vibrating unit usable in an ultrasonic welding machine.

### Prior art

As is known, ultrasonic welding, in particular, for thermoplastic materials, is carried out by applying vibrations, with ultrasonic frequency, to pieces to be welded by means of a vibrating unit comprising a piezoelectric transducer, in particular, a piezoelectric ceramic, which is connected to one of the two ends of a booster and a sonotrode screwed to the other end of the booster.

In particular, the sonotrode is adapted to generate friction between the pieces to be welded by means of such ultrasonic vibration. The friction produced generates heat and consequently, the thermoplastic materials fuse, ensuring a welding therebetween, and mutual assembly.

An ultrasonic power generator device powered with 50Hz/60Hz mains current is configured to provide the aforesaid vibrating unit with an electrical driving signal having a sinusoidal shape with a frequency between 20kHz and 40kHz.

In particular, the piezoelectric transducer of the vibrating unit is adapted to convert the electrical driving signal into a mechanical vibration. The booster is configured to amplify such vibration and transfer it to the sonotrode, which takes the vibrations to the pieces to be welded.

The material fuses on both sides involved in the ultrasonic welding forming a joint, which is practically homogenous after the cooling.

Since the ultrasonic welding process is based on the transformation of mechanical energy, due to the intense vibration, into local thermal energy (latent fusion heat), the need is increasingly felt to improve the efficiency of such transformation.

The ultrasonic welding machinery and processes, in particular, for plastic materials, of the known type, are not without alterations and drawbacks, which may compromise the quality of the welding between two pieces.

For example, thermal expansions can cause changes in the acoustic characteristics of the welding signal, which, if not promptly driven and compensated, could generate increasing thermal drifts. Such thermal drifts can alter the quality of the final result of the welding.

Furthermore, the need is increasingly felt to manufacture ultrasonic power generators capable of powering transducers operating with different operating frequency bands.

Document EP 1 216 760 A2 discloses an electronic device for generating the driving signal for a vibrating unit for ultrasonic welding, with an electronic control unit, an inverter power block and an electronic filtering block. However, the electronic filtering block of this document does not present two frequency responses as disclosed in the present invention.

### SUMMARY OF THE INVENTION

It is an object of the present invention to devise and provide an electronic device for driving and controlling a vibrating unit usable in an ultrasonic welding machine, in particular for thermoplastic materials, allowing the above drawbacks to be at least partially overcome in relation to power generator devices and the welding processes of the known solutions.

Such object is achieved by means of an electronic device for driving and controlling a vibrating unit according to claim 1.

Preferred embodiments of such electronic driving and controlling device are described in the dependent claims.

An ultrasonic welding machine is also the subject of the present invention, including the aforesaid electronic driving and controlling device according to claim 16.

### BRIEF DESCRIPTION OF THE DRAWINGS

Further features and advantages of the electronic driving and controlling device according to the invention will be apparent from the following description of preferred embodiments, given by way of indicative, non-limiting examples, with reference to the accompanying figures, wherein:
- **figure 1** diagrammatically shows an electronic device for driving and controlling a vibrating unit of an ultrasonic welding machine according to the present invention;
- **figure 2** shows a block diagram of the electronic device for driving and controlling the vibrating unit in figure 1;
- **figures 3A-3B** show block diagrams of embodiments of a Fuzzy-PID block included in the electronic driving and controlling device in figure 2;
- **figure 4** shows a circuit diagram of an embodiment of an H-Bridge type power inverter included in the electronic driving and controlling device in figure 2;
- **figure 5** shows a circuit diagram of an embodiment of a bandpass filter included in the electronic driving and controlling device in figure 2;
- **figure 6** shows, as a function of the frequency, diagrams representative of the voltage transfer function of the bandpass filter in figure 5 if the output terminals of such filter are empty or connected to a load, respectively;
- **figure 7** shows a block diagram of an embodiment of a synthesizer block, Direct Digital Synthesis or DDS, included in the electronic driving and controlling device in figure 2.

In the aforesaid figures, equal or similar elements will be indicated with the same reference numerals.

### DETAILED DESCRIPTION OF PREFERRED EMBODIMENTS

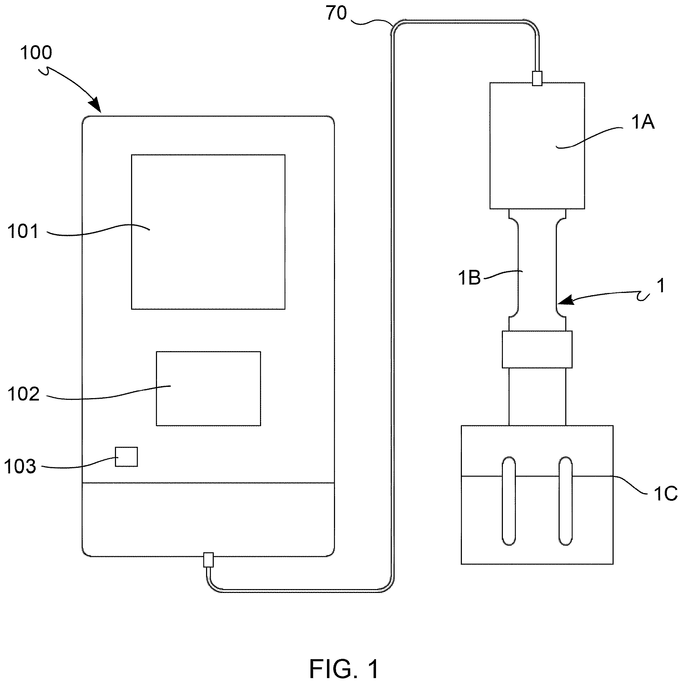

With reference to figures 1-2, an electronic device for driving and controlling a vibrating unit 1 usable in an ultrasonic welding machine according to the present invention is indicated with reference numeral 100.

Such electronic driving and controlling device, or electronic device or, more simply, device 100, is an ultrasonic generator device configured to provide the vibrating unit 1 with an electrical driving signal, for example, of a sinusoidal shape and having a frequency between 20kHz and 40kHz.

The aforesaid vibrating unit 1 comprises a piezoelectric transducer 1A, or a piezoelectric ceramic, connected to one of the two ends of a booster 1B and a sonotrode 1C screwed to the other end of the booster. In particular, the piezoelectric transducer 1A of the vibrating unit 1 is adapted to convert the electrical driving signal into a mechanical vibration. The booster 1B is configured to amplify such vibration and transfer it to the sonotrode 1C, which takes the vibrations to the pieces to be welded.

Such vibrating unit 1 is known by a person skilled in the art, therefore, the structural features thereof will not be described in further detail.

The electronic driving and controlling device 100 of the invention, for example, having a box-like shape, is electrically connected, by means of a connection cable 70, to the vibrating unit 1. Such electronic device 100 comprises data input/output user interface means 101, 102 allowing an operator close to the device 100 to interact directly with the welding machinery. Such user interface means comprise, for example, a colored touch-screen display 101 operating as a data input/output interface and for displaying information. Additionally, such interface means comprise an input interface 102 operable by the operator, concretized, for example, in a knob or button. Such interface 102 also provides digital output signals obtained by solid-state relay and signaling of the level of power by means of a voltage.

Furthermore, the electronic device 100 can comprise further input/output interfaces 103 for communicating with the welding machinery for receiving command signals and returning signals indicative of the processing carried out. Such interfaces 103 are of the field bus type, for example, or real time ethernet.

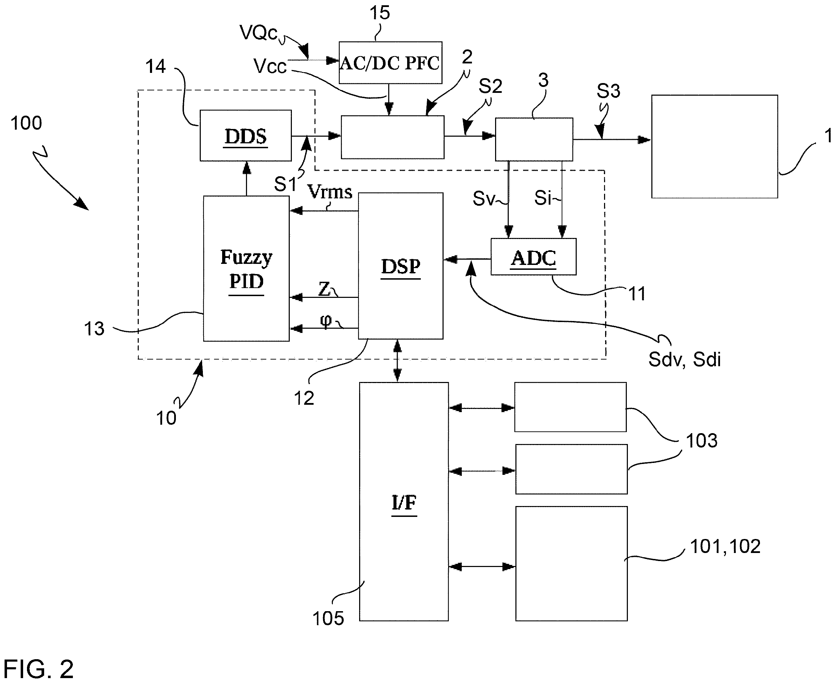

With reference to figure 2, the electronic device 100 for driving and controlling the vibrating unit 1 for ultrasonic welding comprises an electronic control unit 10 configured to control the generation of a voltage driving signal S3 sent to the vibrating unit 1 for the activation of the vibration thereof. Such driving signal S3 is a periodic signal with a controlled frequency within a predetermined frequency range. For example, the driving signal S3 is a sinusoidal or cosinusoidal signal having a frequency between 20kHz and 40kHz.

Furthermore, the electronic device 100 comprises an inverter power block 2 configured to generate a first voltage driving signal S2 from a direct current (Vcc) power supply potential and based on a voltage control signal S1 generated by the electronic control unit 10.

Furthermore, the electronic device 100 comprises an electronic filtering block 3 configured to filter the first voltage driving signal S2 received at the input and generate, at the output, the aforesaid periodic driving signal S3 with a controlled frequency within the predetermined range, for example, sinusoidal.

Note that the electronic filtering block 3 is configured to provide the electronic control unit 10 with at least one feedback signal Sv, Si representative of voltage and/or current values supplied to the vibrating unit 1. Furthermore, the electronic control unit 10 is adapted to generate the voltage control signal S1 based on the aforesaid at least one feedback signal Sv, Si.

Preferably, such at least one feedback signal consists of a feedback voltage signal Sv and a feedback current signal Si.

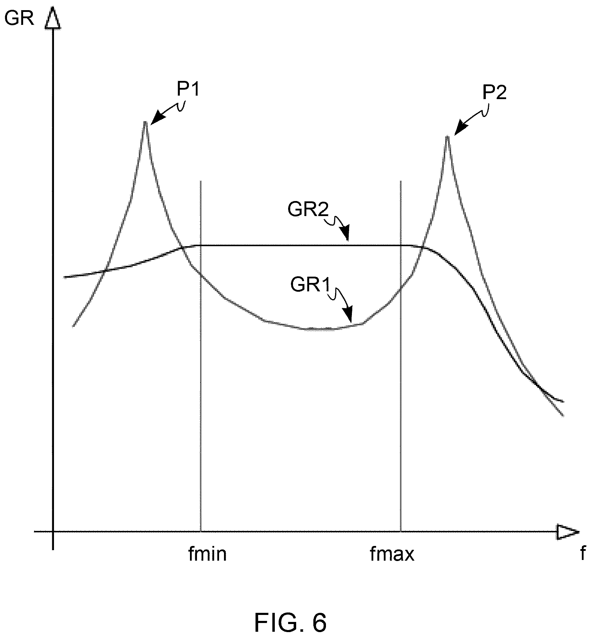

The electronic filtering block 3 is a bandpass filter (Band Pass Filter or BPF). With reference to figure 6, such filter 3 is characterized by a first voltage transfer function GR1 in a first operating condition of the electronic driving and controlling device 100. In such first operating condition, the output of the electronic filtering block 3 is disconnected from the vibrating unit 1, i.e. in the absence of a connection of the electronic driving and controlling device 100 to a load. Such first transfer function GR1 has, as the frequency varies, an amplitude which takes a first peak value P1 for frequency values which are smaller than a predetermined minimum operating frequency fmin and a second peak value P2 for frequency values which are greater than a predetermined maximum operating frequency fmax.

The fmin - fmax frequency range includes the operating frequencies of the driving signals S3 for ultrasonic applications. Therefore, the first voltage transfer function GR1 of the filter 3 calculated empty has the purpose of delimiting the range of frequencies, which can be taken by the driving signals S3 for ultrasonic applications.

For example, in the case of 20kHz ultrasonic welding machinery: fmin=17kHz, fmax=24kHz. In the case of 30kHz, 35kHz and 40kHz welding machinery: fmin=27kHz, fmax=43kHz.

Note that the circuit structure of the bandpass filter 3 of the present invention is such as to be able to function both for broad band apparatuses and for classical single-frequency machines.

Again with reference to figure 6, such bandpass filter 3 is characterized by a second voltage transfer function GR2 in a second operating condition of the electronic driving and controlling device 100. In such second operating condition, the output of the electronic filtering block 3 is connected to the vibrating unit 1, i.e. the electronic driving and controlling device 100 is connected to a load. Note that the term vibrating unit is also understood to mean any load equivalent to a vibrating unit from an electrotechnical point of view. Such second transfer function GR2 has, as the frequency varies, an amplitude which takes a constant value for frequency values between the aforesaid predetermined minimum fmin and maximum fmax operating frequencies.

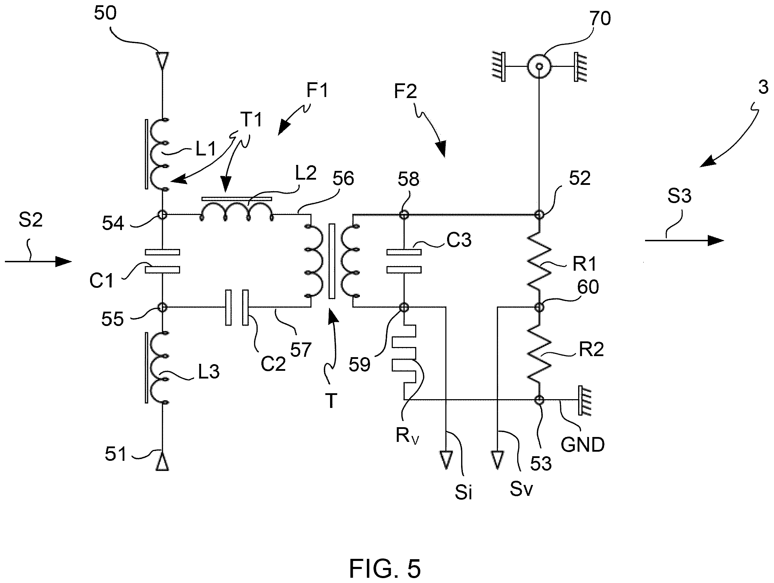

With reference to the preferred embodiment of the filtering block 3 shown in figure 5, the electronic bandpass filtering block 3 comprises:
- an input circuit portion F1 including a first 50 and a second 51 input terminal adapted to receive the first voltage driving signal S2;
- an output circuit portion F2 including a first 52 and a second 53 output terminal adapted to provide the filtered voltage driving signal S3;
- a transformer circuit T configured to connect the first circuit portion F1 and the second circuit portion F2 to each other.

In the example in figure 5, the first output terminal 52 of the filter 3 is directly connected to the electric cable 70 (conveniently insulated), which connects the electronic device 100 to the vibrating unit 1. The second output terminal 53 is connected to a ground potential GND.

In greater detail, the first circuit portion F1 of the electronic filtering block 3 comprises a first L1 and a second inductive winding L3, which are equal to each other. Such first winding L1 is connected between the first input terminal 50 and a first node 54 of the first circuit portion F1. The second winding L3 is connected between the second input terminal 51 and a second node 55 of the first circuit portion F1. Such first L1 and second L3 inductive windings form the primary windings of a first transformer T1.

The first circuit portion F1 of the electronic filtering block 3 further comprises a first capacitor C1 connected between the first 54 and the second input nodes 55. Such first circuit portion F1 also comprises a further inductive winding L2 connected between the first input node 54 and a respective first terminal 56 of the transformer T. Such further inductive winding L2 forms the secondary winding of the first transformer T1.

The first circuit portion F1 of the electronic filtering block 3 further comprises a second capacitor C2 connected between the second input node 55 of the first circuit portion F1 and a respective second terminal 57 of the transformer T.

The second circuit portion F2 of the electronic filtering block 3 comprises a third capacitor C3 connected between a respective third 58 and fourth 59 terminal of the transformer T, i.e. parallel to the secondary of such transformer. Such third terminal 58 is short-circuited with the first output terminal 52 of the electronic filtering block 3. The fourth terminal 59 is connected to the second output terminal 53 of the filter 3, thus to the ground potential GND, through a shunt resistor Rv for measuring the current.

Furthermore, the second circuit portion F2 of the filter 3 comprises a first R1 and a second R2 resistor connected to each other in series between the aforesaid first 52 and second 53 output terminals of the filter 3. For example, in the case of a 20kHz filter 3:
C1=125nF, L1=330µH, L3=330µH, L2=1250µH, C2=3µF, C3=4,7nF, R1=1MOhm, R2=5000hm, Rv=0,20hm.

In the case of a 30-40khz filter:
C1=60nF, E1=180µH, E3=180µH, E2=600µH, C2=3µF, C3=4,7nF, R1=1MOhm, R2=5000hm, Rv=0,20hm

For both of the aforesaid types of filter, the transformer T comprises a primary of 1350 µH and a secondary of 9000 µH.

As evidenced above, the at least one feedback signal generated by the electronic filtering block 3 comprises a feedback voltage signal Sv and a feedback current signal Si. The aforesaid feedback voltage signal Sv is taken at an intermediate node 60 between the aforesaid first R1 and second R2 resistors. The feedback current signal Si is taken at the fourth terminal 59 of the transformer T.

The electronic bandpass filtering block 3 of the invention is adapted to generate, starting from the first driving signal S2 having a highly distorted wave shape, a S3 sinusoidal or cosinusoidal driving signal having a controlled frequency within a predetermined range, to be sent to the piezoelectric transducer 1A of the vibrating unit 1.

The circuit structure of the filter 3 is configured to obtain a filtering performance of the signal capable of operating in a wide range of frequencies.

Thereby, the electronic device 100 can be connected to transducers operating with central operating frequency bands, which are different from one another, without requiring a modification of the circuit diagram. In other words, the electronic driving and controlling device 100 of the invention is capable of operating with different types of sonotrodes belonging to different operating frequencies and is far more versatile than the power generator devices of the known solutions.

Again with reference to figure 2, the electronic control unit 10 of the electronic driving and controlling device 100 of the invention comprises an ADC digital analog converter 11 configured to convert the at least one feedback signal Sv, Si of the analog type into a respective digital feedback signal Sdv, Sdi.

Furthermore, the electronic control unit 10 comprises a microprocessor 12 (Digital Signaling Processor or DSP) configured to process said digital feedback signal Sdv, Sdi to generate an effective voltage signal Vrms and further signals Z, ϕ representative of an impedance and relative phase between the voltage and current supplied to the vibrating unit 1.

Furthermore, the electronic control unit 10 comprises a Fuzzy-PID block 13 configured to receive both the effective voltage signal Vrms and the further Z, ϕ signals, at the input, to command the generation of the voltage control signal S1. Additionally, the electronic control unit 10 comprises a digital synthesizer block DDS 14 configured to generate the aforesaid voltage control signal S1 based on a command received by the Fuzzy-PID block 13.

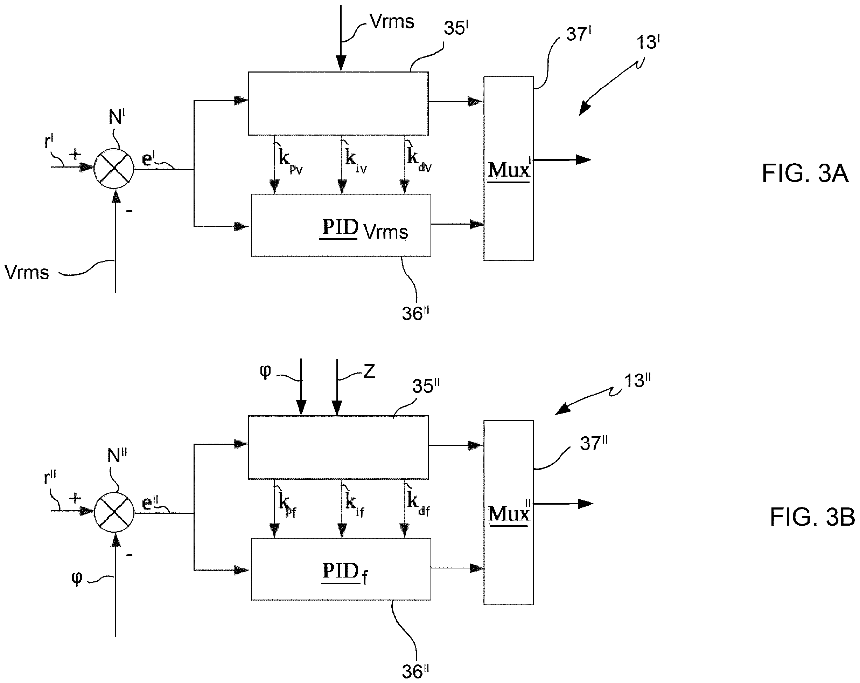

In further detail, the Fuzzy-PID 13 block comprises a first 13' and a second 13" Fuzzy-PID block operating independently of each other. One embodiment of such first 13' and second 13" Fuzzy-PID blocks is shown in figures 3A and 3B.

Such first 13' and second 13" Fuzzy-Pid blocks are configured to control the voltage and the frequency of the driving signal S3 supplied to the vibrating unit 1 through the chain consisting of: synthesizer block 14, inverter power block 2 and bandpass filter 3.

The first Fuzzy-PID block 13' for controlling the voltage, is adapted to transform, by means of a first Fuzzy controller block 35', the aforesaid effective voltage signal Vrms into a first parameter triad Kpv, Kiv, Kdv, which is provided as a reference for a first PID_{Vrms} block 36' .

The second Fuzzy-PID block 13', for controlling the frequency (or phase change), is adapted to transform, by means of a second Fuzzy controller block 35", the aforesaid further signals Z, ϕ representative of an impedance and relative phase between the voltage and current, into a second parameter triad Kpf, Kif, Kdf, which is provided as a reference for a second PID_{f} block 36".

Note that both Fuzzy controller blocks 35' and 35" are obtained so as to make the Fuzzy-PID controller block 13 ready to act to the feedback signals Sdv, Sdi and, at the same time, stable and adaptable to the different frequencies, voltages, powers and types of vibrating units.

With reference to the firmware structure in figure 3A, the first 13' Fuzzy-PID block is configured to receive a first signal r' at the input, representative of a voltage value of reference, which, by means of the node N', is compared with the effective voltage value Vrms and produces a first error signal e'. Such first error signal e' is provided at the input both to the first Fuzzy controller block 35' and to the first PID_{Vrms} block 36'. The outputs of such blocks enter a first multiplexer Mux' 37' configured to transform the outputs of the blocks 35' and 36' in order to be compatible with the input of the digital synthesizer DDS in figure 2.

With reference to the firmware structure in figure 3B, the second 13" Fuzzy-PID block is configured to receive a second signal r" at the input, representative of a phase value of reference, which, by means of the node N", is compared with the relative phase value ϕ between the voltage and current and produces a second error signal e". Such second error signal e" is provided at the input both to the second Fuzzy controller block 35" and to the second PID_{f} block 36". The outputs of such blocks enter a second multiplexer Mux" 37" configured to transform the outputs of the blocks 35" and 36" in order to be compatible with the input of the DDS digital synthesizer in figure 2.

Note that the second phase signal r" of reference can be selected based on the operating point of the sonotrode 1C of the vibrating unit 1 driven by the generator device 100 of the invention.

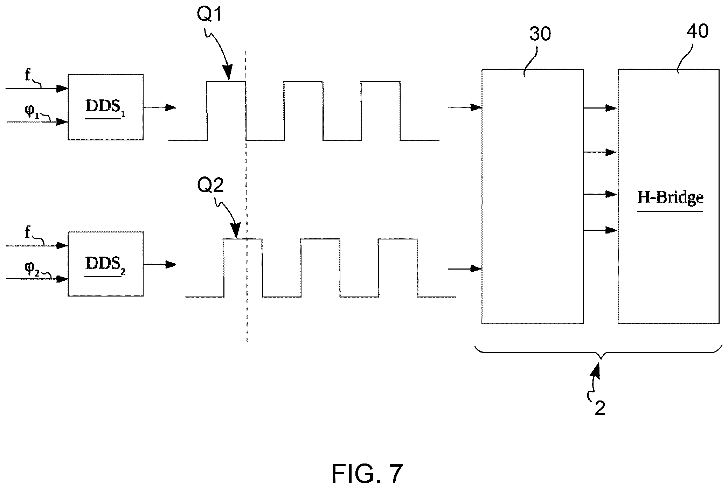

With reference to figure 7, in an embodiment, the digital synthesizer block DDS 14 comprises a first DDS1 and a second DDS2 synthesizer block, which are equal to each other and configured to generate a first Q1 and a second Q2 square wave signal, respectively, based on one same frequency value f and a respective first ϕ1 and second ϕ2 phase signal received at the input. Such first Q1 and second Q2 square wave signal, having a duty-cycle of 50% and mutually offset, are supplied to the inverter power block 2.

Note that the frequency value f is representative of the excitation frequency of the vibrating unit 1. Furthermore, one difference between the first ϕ1 and the second ϕ2 phase signal is representative of an operating voltage of the vibrating unit 1.

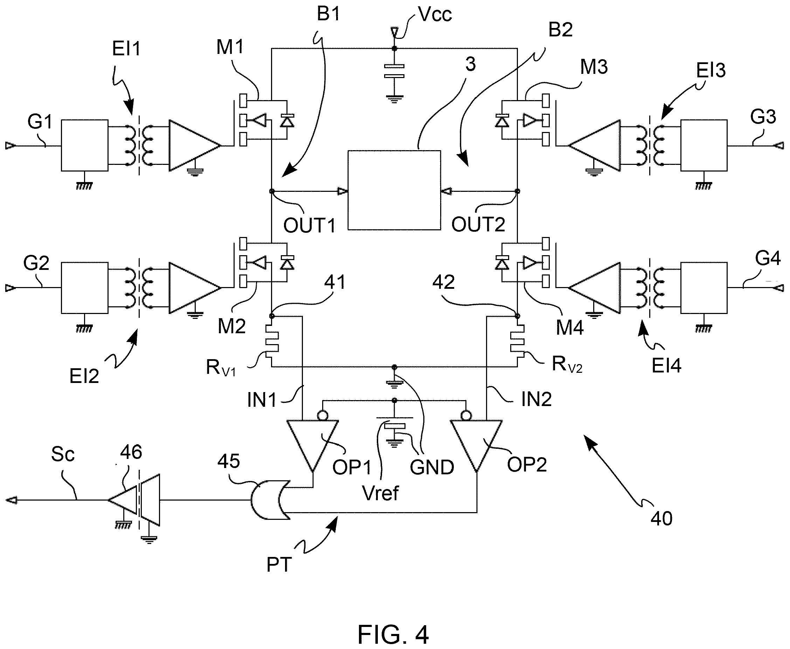

With reference to figures 4 and 7, an embodiment of the inverter power block 2 included in the electronic device 100 of the invention is described below.

In particular, such inverter power block 2 is of the H-Bridge type and comprises a driving portion 30 of the H-Bridge inverter and a power portion 40.

In particular, the power portion 40 of the H-Bridge inverter block comprises:
- a first inverter branch B1 comprising a first M1 and a second M2 power MOSFET;
- a second inverter branch B2 comprising a third M3 and a fourth M4 power MOSFET.

Such first M1 and third M3 power MOSFETs are connected between a power supply terminal at the power supply potential Vcc in direct current and a first OUT1 and a second OUT2 output terminal of the H-Bridge inverter 40, respectively.

Such second M2 and fourth M3 power MOSFETs are connected between the aforesaid first OUT1 and second OUT2 output terminals of the H-Bridge inverter 40 and a terminal at the ground GND potential through a first Rv1 and a second Rv2 calibrated resistor, respectively.

Note that the first OUT1 and the second OUT2 output terminals of the H-Bridge inverter 40 are connected to the electronic filtering block 3, i.e. to the input terminals 50, 51 of the filter 3 in figure 5, respectively.

Furthermore, each gate terminal of the aforesaid first M1, second M2, third M3 and fourth M4 power MOSFETs is connected to a respective input terminal G1, G2, G3, G4 of the H-Bridge inverter 40 by interposing a galvanic isolation circuit element EI1, EI2, EI3, EI4. Such isolation elements E1, EI2, EI3, EI4, which are equal to one another, are of the type known to a person skilled in the art and evidence a galvanic separation between two circuit areas: a first area exposed to a potential, which cannot be connected to the frame of the machine and a second area, which admits being electrically connected to the frame of the machine.

Note that the H-Bridge inverter 40 is configured to generate the first driving signal S2, which is conveniently filtered to generate the excitation driving signal S3 of the piezoelectric transducer 1A.

The input terminals G1, G2, G3, G4 of the H-Bridge Inverter 40 are excited by the two square wave signals Q1 and Q2 generated by the synthesizer 14, which are mutually regulated so as to be offset with respect to each other. Such signals represent the control signal S1 generated by the electronic control unit 10 for controlling the driving signal S3.

Note that the phase difference between the two square wave signals Q1 and Q2, which supply the input terminals G1, G2, G3, G4 of the H-Bridge Inverter 40, determines the driving amplitude value S3, which is provided to the piezoelectric transducer 1A.

Additionally, the power portion 40 of the H-Bridge Inverter block 2 comprises a digital circuit PT adapted to detect the current in said first B1 and second B2 branches of the inverter with every single wave cycle and operating for the protection from overcurrents.

In further detail, a first IN1 and a second IN2 input of the digital circuit PT are connected to nodes 41, 42, provided on each branch, intermediate between the second M2 and fourth M4 power Mosfets and the aforesaid first Rv1 and second Rv2 calibrated resistors. Such inputs IN1, IN2 are connected to non-inverting inputs of two comparators OP1, OP2, which are equal to each other and having the respective inverting inputs connected to one same voltage of reference Vref.

The respective outputs of such comparators form the inputs of a logic gate OR 45 with two inputs configured to drive an isolator circuit 46, which is adapted to send the electronic control unit 10 a signal Sc representative of overcurrent values.

Unlike the traditional protective solutions, the protective solution provided with the digital circuit PT has the advantage of intercepting each brief overload on the Mosfet devices M1, M2, M3, M4, much more promptly, increasing their immunity from permanent damage and that of other circuits installed in general.

Furthermore, advantageously, the H-Bridge Inverter 40 used in the electronic device 100 of the invention allows important levels of electrical efficiency to be obtained, enabling the apparatus to be used to its fullest potential with important power also with a continuous cycle, not only with short power pulses followed by pauses with null power.

Again with reference to figure 2, the electronic device 100 for driving and controlling the vibrating unit 1 further comprises a voltage converting block 15 from alternating current to direct current, AC/DC PFC, for example, of the Switching Mode Power Supply (SMPS) type, configured to generate the aforesaid power supply potential Vcc in direct current from mains power supply potential Vac in alternating current, for example, the power supply industrial network.

In particular, the voltage converting block 15 comprises a power factor correction block PFC in the Single Booster type operating in continuous conduction mode or CCM. Circuit diagrams of such corrector block are known to a person skilled in the art.

The AC/DC PFC block 15 allows a stabilized direct current (DC) voltage to be obtained at the output, equal to about 390V +/-5% accepting, from the power supply at the input, voltage values of between 90Vac and 265Vac. Such circuit is configured to operate at 50Hz and at 60Hz without requiring setting operations by an operator.

Such AC/DC PFC block 15 has the advantage that the withdrawal of electricity by the apparatus takes place without producing undesired effects on the power mains, such as distortions of the waveform of the voltage and current besides possible shifts of the two same variables. Such undesired effects could create problems for other users connected to the same power line. Furthermore, the AC/DC PFC block 15 also has the advantage of ensuring an elevated electrical efficiency, in particular, generating less heat with the same dimensions, especially in the case of using the power with a continuous cycle.

With reference to figure 2, the electronic device 100 comprises an electronic interface block I/F 105 configured to put the electronic control unit 10 in communication with the input/output user interface means 101, 102 and with the communication interfaces 103.

In order to satisfy contingent needs, a person skilled in the art may make changes and adaptations to the embodiments of the electronic driving and controlling device and replace elements with others, which are functionally equivalent.

## Claims

1. An electronic device (100) for driving and controlling a vibrating unit (1) for ultrasonic welding, comprising:
- an electronic control unit (10) configured to control the generation of a voltage driving signal (S3) sent to the vibrating unit (1) to activate the vibration thereof, said driving signal (S3) being a periodic signal with a controlled frequency within a predetermined frequency range;
- an inverter power block (2) configured to generate a first voltage driving signal (S2) from a power supply potential (Vcc) in direct current and based on a voltage control signal (S1) generated by the electronic control unit (10);
- an electronic filtering block (3) configured to filter said first voltage driving signal (S2) received at the input, and generate said periodic driving signal (S3) with a controlled frequency at the output;
said electronic filtering block (3) being configured to provide the electronic control unit (10) with at least one feedback signal (Sv, Si) representative of voltage and/or current values supplied to the vibrating unit (1), said electronic control unit (10) generating the voltage control signal (S1) based on said at least one feedback signal (Sv, Si);
said electronic device being **characterized in that**:
said electronic filtering block (3) is a bandpass filter having:
- a first voltage transfer function (GR1) in a first operating condition, said first transfer function (GR1) having, as the frequency varies, an amplitude which takes a first peak value (P1) for frequency values which are smaller than a predetermined minimum operating frequency (fmin) and a second peak value (P2) for frequency values which are greater than a predetermined maximum operating frequency (fmax),
- a second voltage transfer function (GR2) in a second operating condition, said second transfer function (GR2) having, as the frequency varies, an amplitude which takes a constant value for frequency values between said predetermined minimum operating frequency (fmin) and said predetermined maximum operating frequency (fmax).

2. The electronic device (100) for driving and controlling a vibrating unit (1) according to claim 1, wherein said electronic bandpass filtering block (3) comprises:
- an input circuit portion (F1) including a first (50) and a second (51) input terminal adapted to receive the first voltage driving signal (S2);
- an output circuit portion (F2) including a first (52) and a second (53) output terminal adapted to provide the filtered voltage driving signal (S3);
- a transformer circuit (T) configured to connect the first circuit portion (F1) and the second circuit portion (F2) to each other.

3. The electronic device (100) for driving and controlling a vibrating unit (1) according to claim 2, wherein said first circuit portion (F1) of the electronic filtering block (3) comprises:
- a first (L1) and a second (L3) inductive winding, equal to each other, said first winding (L1) being connected between the first input terminal (50) and a first node (54) of the first circuit portion, said second winding (L3) being connected between the second input terminal (51) and a second node (55) of the first circuit portion, said first and second inductive windings forming the primary windings of a first transformer (T1);
- a first capacitor (C1) connected between said first (54) and second (55) input nodes;
- a further inductive winding (L2) connected between said first input node (54) and a respective first terminal (56) of the transformer (T), said further inductive winding forming the secondary winding of the first transformer (T1);
- a second capacitor (C2) connected between the second input node (55) of the first circuit portion (F1) and a respective second terminal (57) of the transformer (T).

4. The electronic device (100) for driving and controlling a vibrating unit (1) according to claim 2, wherein said second circuit portion (F2) of the electronic filtering block (3) comprises:
- a third capacitor (C3) connected between a respective third (58) and a fourth (59) terminal of the transformer (T), said third terminal being short-circuited with the first output terminal (52) of the electronic filtering block (3), said fourth terminal being connected to the second output terminal (53) through a shunt resistor (Rv);
- a first (R1) and a second (R2) resistor connected to each other in series between said first and second output terminals.

5. The electronic device (100) for driving and controlling a vibrating unit (1) according to claim 4, wherein said at least one feedback signal comprises a feedback voltage signal (Sv) and a feedback current signal (Si), the feedback voltage signal being taken at an intermediate node (60) between said first (R1) and second (R2) resistors, the feedback current signal being taken at the fourth terminal (59) of the transformer (T).

6. The electronic device (100) for driving and controlling a vibrating unit (1) according to claim 1, wherein said electronic control unit (10) comprises:
- an analog-to-digital ADC converter (11) configured to convert said at least one feedback signal (Sv, Si) of the analog type into a respective digital feedback signal (Sdv, Sdi);
- a DSP microprocessor (12) configured to process said digital feedback signal (Sdv, Sdi) to generate an effective voltage signal (Vrms) and further signals (Z,ϕ) representative of an impedance and relative phase between the voltage and current supplied to the vibrating unit (1) ;
- a Fuzzy-PID block (13) configured to receive said effective voltage signal (Vrms) and said further signals (Z,ϕ) at the input to command the generation of the voltage control signal (S1);
- a digital synthesizer block DDS (14) configured to generate said voltage control signal (S1) based on a command received from said Fuzzy-PID block (13).

7. The electronic device (100) for driving and controlling a vibrating unit (1) according to claim 6, wherein said DDS digital synthesizer block (14) comprises a first (DDS1) and a second (DDS2) synthesizer block configured to generate a first (Q1) and a second (Q2) square wave signal, respectively, based on one same frequency value (f) and a respective first (ϕ1) and second (ϕ2) phase signal received at the input, said first (Q1) and second (Q2) square wave signals being supplied to the inverter power block (2).

8. The electronic device (100) for driving and controlling a vibrating unit (1) according to claim 7, wherein said frequency value (f) is representative of the excitation frequency of the vibrating unit (1), a difference between the first (ϕ1) and second (ϕ2) phase signals is representative of an operating voltage of the vibrating unit (1).

9. The electronic device (100) for driving and controlling a vibrating unit (1) according to claim 1, wherein said inverter power block (2) is of the H-Bridge type and comprises a driving portion (30) of the H-Bridge inverter and a power portion (40).

10. The electronic device (100) for driving and controlling a vibrating unit (1) according to claim 9, wherein said power portion (40) of the H-Bridge inverter block comprises:
- a first inverter branch (B1) comprising a first (M1) and a second (M2) power MOSFET;
- a second inverter branch (B2) comprising a third (M3) and a fourth (M4) power MOSFET,
said first (M1) and third (M3) power MOSFETs being connected between a power supply terminal at the power supply potential (Vcc) in direct current and a first (OUT1) and a second (OUT2) output terminal of the H-Bridge inverter, respectively;
said second (M2) and fourth (M3) power MOSFETs being connected between said first (OUT1) and second (OUT2) output terminals of the H-Bridge inverter and a terminal at the ground (GND) potential through a first (Rv1) and a second (Rv2) calibrated resistor, respectively,
said first (OUT1) and second (OUT2) output terminals of the H-Bridge inverter being connected to the electronic filtering block (3).

11. The electronic device (100) for driving and controlling a vibrating unit (1) according to claim 10, wherein each gate terminal of said first (M1), second (M2), third (M3) and fourth (M4) power MOSFETs is connected to a respective input terminal (G1, G2, G3, G4) of the H-Bridge inverter by interposing an isolation circuit element (EI1, EI2, EI3, EI4).

12. The electronic device (100) for driving and controlling a vibrating unit (1) according to claim 10, wherein said power portion (40) of the H-Bridge inverter block further comprises a digital circuit (PT) for the detection of current in said first (B1) and second (B2) branches with every single wave cycle and for the protection from overcurrents.

13. The electronic device (100) for driving and controlling a vibrating unit (1) according to claim 6, wherein said Fuzzy-PID block (13) comprises:
- a first Fuzzy-PID block (13') for controlling the voltage of the driving signal (S3), adapted to transform, by means of a first Fuzzy controller block (35'), said effective voltage signal (Vrms) into a first parameter triad (Kpv, Kiv, Kdv) which is provided as a reference for a first PID_{Vrms} block (36');
- a second Fuzzy-PID block (13"), for controlling the frequency, adapted to transform, by means of a second Fuzzy controller block (35"), said further signals (Z,ϕ) into a second parameter triad (Kpf, Kif, Kdf) which is provided as a reference for a second PID_{f} block (36").

14. The electronic device (100) for driving and controlling a vibrating unit (1) according to claim 13, wherein:
said first Fuzzy-PID block (13') is configured to compare a first input signal (r') representative of a reference voltage value to the effective voltage value (Vrms) for generating a first error signal (e') to be provided as an input to both the first Fuzzy controller block (35') and
the first PID_{Vrms} block (36'), the outputs of such blocks being sent to the DDS digital synthesizer block (14) by means of a first multiplexer Mux' (37');
said second Fuzzy-PID block (13") is configured to compare a second input signal (r") representative of a reference phase value to the relative phase value (ϕ ) between the voltage and the current to generate a second error signal (e") to be provided as an input to both the second Fuzzy controller block (35") and the second PID_{f} block (36"), the outputs of such blocks being sent to the DDS digital synthesizer block (14) through a second multiplexer Mux" (37").

15. The electronic device (100) for driving and controlling a vibrating unit (1) according to claim 1, further comprising a block (15) for converting voltage from alternating current to direct current, which is configured to generate said power supply potential (Vcc) in direct current from mains power supply potential (Vac) in alternating current, said voltage converting block (15) comprising an AC/DC PFC power factor corrector block of the Single Booster type operating in Continuous Conduction Mode,CCM.

16. An ultrasonic welding machine comprising:
- a vibrating unit (1) configured to generate vibrations with ultrasonic frequency;
- an electronic device (100) for driving and controlling said vibrating unit according to any one of claims 1-15.

## Patentansprüche

1. Elektronische Vorrichtung (100) zum Treiben und Steuern einer Vibrationseinheit (1) für Ultraschallschweißen, umfassend:
- eine elektronische Steuerungseinheit (10), welche dazu eingerichtet ist, die Erzeugung eines Spannungstreibersignals (S3) zu steuern, welches an die Vibrationseinheit (1) gesendet wird, um die Vibration davon zu aktivieren, wobei das Treibersignal (S3) ein periodisches Signal mit einer gesteuerten Frequenz innerhalb eines vorbestimmten Frequenzbereichs ist;
- einen Inverter-Leistungsblock (2), welcher dazu eingerichtet ist, ein erstes Spannungstreibersignal (S2) aus einem Leistungszuführungspotential (Vcc) in Gleichstrom und auf Grundlage eines Spannungssteuerungssignals (S1) zu erzeugen, welches durch die elektronische Steuerungseinheit (10) erzeugt wird;
- einen elektronischen Filterblock (3), welcher dazu eingerichtet ist, das erste Spannungstreibersignal (S2) zu filtern, welches an dem Eingang empfangen wird, und das periodische Treibersignal (S3) mit einer gesteuerten Frequenz an dem Ausgang zu erzeugen;
wobei der elektronische Filterblock (3) dazu eingerichtet ist, der elektronischen Steuerungseinheit (10) wenigstens ein Rückkopplungssignal (Sv, Si) bereitzustellen, welches für eine Spannung und/oder für Stromwerte repräsentativ ist, welche der Vibrationseinheit (1) zugeführt werden, wobei die elektronische Steuerungseinheit (10) das Spannungssteuerungssignal (S1) auf Grundlage des wenigstens einen Rückkopplungssignals (Sv, Si) erzeugt; wobei die elektronische Steuerungsvorrichtung **dadurch gekennzeichnet ist, dass**:
der elektronische Filterblock (3) ein Bandpass-Filter ist, welcher aufweist:
- eine erste Spannungsübertragungsfunktion (GR1) in einem ersten Betriebszustand, wobei die erste Übertragungsfunktion (GR1), wenn die Frequenz variiert, eine Amplitude aufweist, welche einen ersten Spitzenwert (P1) für Frequenzwerte, welche kleiner als eine vorbestimmte minimale Betriebsfrequenz (fmin) sind, und einen zweiten Spitzenwert (P2) für Frequenzwerte einnimmt, welche größer als eine vorbestimmte maximale Betriebsfrequenz (fmax) sind,
- eine zweite Spannungsübertragungsfunktion (GR2) in einem zweiten Betriebszustand, wobei die zweite Übertragungsfunktion (GR2), wenn die Frequenz variiert, eine Amplitude aufweist, welche einen konstanten Wert für Frequenzwerte zwischen der vorbestimmten minimalen Betriebsfrequenz (fmin) und der vorbestimmten maximalen Betriebsfrequenz (fmax) einnimmt.

2. Elektronische Vorrichtung (100) zum Treiben und Steuern einer Vibrationseinheit (1) nach Anspruch 1, wobei der elektronische Bandpass-Filterblock (3) umfasst:
- einen Eingangsschaltungsabschnitt (F1), welcher einen ersten (50) und einen zweiten (51) Eingangsanschluss aufweist, welche dazu eingerichtet sind, das erste Spannungstreibersignal (S2) zu empfangen;
- einen Ausgangsschaltungsabschnitt (F2), welcher einen ersten (52) und einen zweiten (53) Ausgangsanschluss umfasst, welche dazu eingerichtet sind, das gefilterte Spannungstreibersignal (S3) bereitzustellen;
- eine Transformatorschaltung (T), welche dazu eingerichtet ist, den ersten Schaltungsabschnitt (F1) und den zweiten Schaltungsabschnitt (F2) miteinander zu verbinden.

3. Elektronische Vorrichtung (100) zum Treiben und Steuern einer Vibrationseinheit (1) nach Anspruch 2, wobei der erste Schaltungsabschnitt (F1) des elektronischen Filterblocks (3) umfasst:
- eine erste (L1) und eine zweite (L3) induktive Wicklung, welche zueinander gleich sind, wobei die erste Wicklung (L1) zwischen den ersten Eingangsanschluss (50) und einen ersten Knoten (54) des ersten Schaltungsabschnitts geschaltet ist, wobei die zweite Wicklung (L3) zwischen den zweiten Eingangsanschluss (51) und einen zweiten Knoten (55) des ersten Schaltungsabschnitts geschaltet ist, wobei die erste und die zweite induktive Wicklung die primären Wicklungen eines ersten Transformators (T1) bilden;
- einen ersten Kondensator (C1), welcher zwischen den ersten (54) und den zweiten (55) Eingangsknoten geschaltet ist;
- eine weitere induktive Wicklung (L2), welche zwischen den ersten Eingangsknoten (54) und einen entsprechenden ersten Anschluss (56) des Transformators (T) geschaltet ist, wobei die weitere induktive Wicklung die sekundäre Wicklung des ersten Transformators (T1) bildet;
- einen zweiten Kondensator (C2), welcher zwischen den zweiten Eingangsknoten (55) des ersten Schaltungsabschnitts (F1) und einen entsprechenden zweiten Anschluss (57) des Transformators (T) geschaltet ist.

4. Elektronische Vorrichtung (100) zum Treiben und Steuern einer Vibrationseinheit (1) nach Anspruch 2, wobei der zweite Schaltungsabschnitt (F2) des elektronischen Filterblocks (3) umfasst:
- einen dritten Kondensator (C3), welcher zwischen einen entsprechenden dritten (58) und einen vierten (59) Anschluss des Transformators (T) geschaltet ist, wobei der dritte Anschluss mit dem ersten Ausgangsanschluss (52) des elektronischen Filterblocks (3) kurzgeschlossen ist, wobei der vierte Anschluss durch einen Shunt-Widerstand (Rv) mit dem zweiten Ausgangsanschluss (53) verbunden ist;
- einen ersten (R1) und einen zweiten (R2) Widerstand, welche zwischen dem ersten und dem zweiten Ausgangsanschluss miteinander in Reihe geschaltet sind.

5. Elektronische Vorrichtung (100) zum Treiben und Steuern einer Vibrationseinheit (1) nach Anspruch 4, wobei das wenigstens eine Rückkopplungssignal ein Rückkopplungsspannungssignal (Sv) und ein Rückkopplungsstromsignal (Si) umfasst, wobei das Rückkopplungsspannungssignal an einem Zwischenknoten (60) zwischen dem ersten (R1) und dem zweiten (R2) Widerstand abgenommen wird, wobei das Zwischenstromsignal an dem vierten Anschluss (59) des Transformators (T) abgenommen wird.

6. Elektronische Vorrichtung (100) zum Treiben und Steuern einer Vibrationseinheit (1) nach Anspruch 1, wobei die elektronische Steuerungseinheit (10) umfasst:
- einen Analog-Digital-ADC-Wandler (11), welcher dazu eingerichtet ist, das wenigstens eine Rückkopplungssignal (Sv, Si) des analogen Typs in ein entsprechendes digitales Rückkopplungssignal (Sdv, Sdi) zu wandeln;
- einen DSP-Mikroprozessor (12), welcher dazu eingerichtet ist, das digitale Rückkopplungssignal (Sdv, Sdi) zu verarbeiten, um ein effektives Spannungssignal (Vrms) und weitere Signale (Z, ϕ) zu erzeugen, welche für eine Impedanz und eine relative Phase zwischen der Spannung und dem Strom repräsentativ sind, welche der Vibrationseinheit (1) zugeführt werden;
- einen Fuzzy-PID-Block (13), welcher dazu eingerichtet ist, das effektive Spannungssignal (Vrms) und die weiteren Signale (Z, ϕ) an dem Eingang zu empfangen, um die Erzeugung des Spannungssteuerungssignals (S1) zu befehlen;
- einen digitalen Synthesizerblock-DDS (14), welcher dazu eingerichtet ist, das Spannungssteuerungssignal (S1) auf Grundlage eines Befehls zu erzeugen, welcher von dem Fuzzy-PID-Block (13) empfangen worden ist.

7. Elektronische Vorrichtung (100) zum Treiben und Steuern einer Vibrationseinheit (1) nach Anspruch 6, wobei der DDS-Digital-Synthesizerblock (14) einen ersten (DDS1) und einen zweiten (DDS2) Synthesizerblock umfasst, welche dazu eingerichtet sind, ein erstes (Q1) bzw. ein zweites (Q2) Rechteckwellensignal auf Grundlage eines gleichen Frequenzwerts (f) und eines entsprechenden ersten (ϕ1) und eines entsprechenden zweiten (ϕ2) Phasensignals zu erzeugen, welche an dem Eingang empfangen worden sind, wobei das erste (Q1) und das zweite (Q2) Rechteckwellensignal dem Inverter-Leistungsblock (2) zugeführt werden.

8. Elektronische Vorrichtung (100) zum Treiben und Steuern einer Vibrationseinheit (1) nach Anspruch 7, wobei der Frequenzwert (f) für die Anregungsfrequenz der Vibrationseinheit (1) repräsentativ ist, wobei eine Differenz zwischen dem ersten (ϕ1) und dem zweiten (ϕ2) Phasensignal für eine Betriebsspannung der Vibrationseinheit (1) repräsentativ ist.

9. Elektronische Vorrichtung (100) zum Treiben und Steuern einer Vibrationseinheit (1) nach Anspruch 1, wobei der Inverter-Leistungsblock (2) von dem H-Brücke-Typ ist und einen Treiberabschnitt (30) des H-Brücke-Inverters und einen Leistungsabschnitt (40) umfasst.

10. Elektronische Vorrichtung (100) zum Treiben und Steuern einer Vibrationseinheit (1) nach Anspruch 9, wobei der Leistungsabschnitt (40) des H-Brücke-Inverter-Blocks umfasst:
- einen ersten Inverter-Zweig (B1), welcher einen ersten (M1) und einen zweiten (M2) Leistung-MOSFET umfasst;
- einen zweiten Inverter-Zweig (B2), welcher einen dritten (M3) und einen vierten (M4) Leistung-MOSFET umfasst,
wobei der erste (M1) und der dritte (M3) Leistung-MOSFET zwischen einen Leistungszuführungsanschluss an dem Leistungszuführungspotenzial (Vcc) in Gleichstrom und einen ersten (OUT1) bzw. einen zweiten (OUT2) Ausgangsanschluss des H-Brücke-Inverters geschaltet sind;
wobei der zweite (M2) und der vierte (M3) Leistung-MOSFET zwischen den ersten (OUT1) bzw. den zweiten (OUT2) Ausgangsanschluss des H-Brücke-Inverters und einen Anschluss an dem Masse (GND)-Potenzial durch einen ersten (Rv1) bzw. einen zweiten (Rv2) kalibrierten Widerstand geschaltet sind, wobei der erste (OUT1) und der zweite (OUT2) Ausgangsanschluss des H-Brücke-Inverters mit dem elektronischen Filterblock (3) verbunden sind.

11. Elektronische Vorrichtung (100) zum Treiben und Steuern einer Vibrationseinheit (1) nach Anspruch 10, wobei jeder Gate-Anschluss des ersten (M1), des zweiten (M2), des dritten (M3) und des vierten (M4) Leistung-MOSFETs mit einem entsprechenden Eingangsanschluss (G1, G2, G3, G4) des H-Brücke-Inverters durch Zwischenschalten eines Isolationsschaltungselements (EI1, EI2, EI3, EI4) verbunden ist.

12. Elektronische Vorrichtung (100) zum Treiben und Steuern einer Vibrationseinheit (1) nach Anspruch 10, wobei der Leistungsabschnitt (40) des H-Brücke-Inverter-Blocks ferner eine digitale Schaltung (PT) für die Detektion von Strom in dem ersten (B1) und dem zweiten (B2) Zweig mit jedem einzelnen Wellenzyklus und für den Schutz von Überströmen umfasst.

13. Elektronische Vorrichtung (100) zum Treiben und Steuern einer Vibrationseinheit (1) nach Anspruch 6, wobei der Fuzzy-PID-Block (13) umfasst:
- einen ersten Fuzzy-PID-Block (13') zum Steuern der Spannung des Treibersignals (S3), welcher dazu eingerichtet ist, mittels eines ersten Fuzzy-Steuerungseinheit-Blocks (35'), das effektive Spannungssignal (Vrms) in eine erste Parameter-Triade (Kpv, Kiv, Kdv) zu transformieren, welche als eine Referenz für einen ersten PID_{Vrms}-Block (36') bereitgestellt ist;
- einen zweiten Fuzzy-PID-Block (13") zum Steuern der Frequenz, welcher dazu eingerichtet ist, mittels eines zweiten Fuzzy-Steuerungseinheit-Blocks (35"), die weiteren Signale (Z, ϕ) in eine zweite Parameter-Triade (Kpf, Kif, Kdf) zu transformieren, welche als eine Referenz für einen zweiten PID_{f}-Block (36") bereitgestellt ist.

14. Elektronische Vorrichtung (100) zum Treiben und Steuern einer Vibrationseinheit (1) nach Anspruch 13, wobei:
der erste Fuzzy-PID-Block (13') dazu eingerichtet ist, ein erstes Eingangssignal (r'), welches für einen Referenzspannungswert repräsentativ ist, mit dem effektiven Spannungswert (Vrms) zum Erzeugen eines ersten Fehlersignals (e') zu vergleichen, welches als eine Eingabe an sowohl den ersten Fuzzy-Steuerungseinheit-Block (35') als auch den ersten PID_{Vrms}-Block (36') bereitzustellen ist, wobei die Ausgaben solcher Blöcke mittels eines ersten Multiplexers Mux' (37') an den DDS-Digital-Synthesizerblock (14) gesendet werden;
wobei der zweite Fuzzy-PID-Block (13") dazu eingerichtet ist, ein zweites Eingangssignal (r"), welches für einen Referenzphasenwert repräsentativ ist, mit dem relativen Phasenwert (ϕ) zwischen der Spannung und dem Strom zu vergleichen, um ein zweites Fehlersignal (e") zu erzeugen, welches als eine Eingabe sowohl an den zweiten Fuzzy-Steuerungseinheit-Block (35") als auch an den zweiten PID_{f}-Block (36") bereitzustellen ist, wobei die Ausgaben solcher Blöcke durch einen zweiten Multiplexer Mux" (37") an den DDS-Digital-Synthesizerblock (14) gesendet werden.

15. Elektronische Vorrichtung (100) zum Treiben und Steuern einer Vibrationseinheit (1) nach Anspruch 1, ferner umfassend einen Block (15) zum Konvertieren einer Spannung von Wechselstrom zu Gleichstrom, welcher dazu eingerichtet ist, das Leistungszuführungspotenzial (Vcc) in Gleichstrom aus einem Netz-Leistungszuführungspotenzial (Vac) in Wechselstrom zu erzeugen, wobei der Spannungskonverterblock (15) einen AC/DC-PFC-Leistungsfaktor-Korrektor-Block des Single-Booster-Typs umfasst, welcher in einem Continous-Conduction-Mode, CCM betrieben wird.

16. Ultraschall-Schweißmaschine, umfassend:
- eine Vibrationseinheit (1), welche dazu eingerichtet ist, Vibrationen mit Ultraschallfrequenz zu erzeugen;
- eine elektronische Vorrichtung (100) zum Treiben und Steuern der Vibrationseinheit nach einem der Ansprüche 1-15.

## Revendications

1. Appareil électronique (100) pour alimenter et contrôler une unité de vibration (1) pour souder à ultrasons, comprenant :
- une unité de contrôle électronique (10) configurée pour contrôler la génération d'un signal d'alimentation de tension (S3) envoyé à l'unité de vibration (1) pour activer la vibration de celle-ci, ledit signal d'alimentation (S3) étant un signal périodique avec une fréquence contrôlée à l'intérieur d'une plage de fréquences prédéterminée ;
- un bloc électrique onduleur (2) configuré pour générer un premier signal d'alimentation de tension (S2) à partir d'un potentiel d'alimentation électrique (Vcc) en courant continu et sur la base d'un signal de contrôle de tension (S1) généré par l'unité de contrôle électronique (10) ;
- un bloc de filtrage électronique (3) configuré pour filtrer ledit premier signal d'alimentation de tension (S2) reçu à l'entrée, et générer ledit signal d'alimentation périodique (S3) avec une fréquence contrôlée à la sortie ;
ledit bloc de filtrage électronique (3) étant configuré pour fournir, à l'unité de contrôle électronique (10), au moins un signal de rétroaction (Sv, Si) représentatif de valeurs de tension et/ou de courant fournies à l'unité de vibration (1), ladite unité de contrôle électronique (10) générant le signal de contrôle de tension (S1) sur la base dudit au moins un signal de rétroaction (Sv, Si) ;
ledit appareil électronique étant **caractérisé en ce que** :
ledit bloc de filtrage électronique (3) est un filtre passe-bande comportant :
- une première fonction de transfert de tension (GR1) dans un premier état de fonctionnement, ladite première fonction de transfert (GR1) comportant, au fur et à mesure d'une variation de la fréquence, une amplitude qui prend une première valeur de crête (P1) pour des valeurs de fréquence qui sont inférieures à une fréquence de fonctionnement minimale prédéterminée (fmin) et une seconde valeur de crête (P2) pour des valeurs de fréquence qui sont supérieures à une fréquence de fonctionnement maximale prédéterminée (fmax),
- une seconde fonction de transfert de tension (GR2) dans un second état de fonctionnement, ladite seconde fonction de transfert (GR2) comportant, au fur et à mesure d'une variation de la fréquence, une amplitude qui prend une valeur constante pour des valeurs de fréquence entre ladite fréquence de fonctionnement minimale prédéterminée (fmin) et ladite fréquence de fonctionnement maximale prédéterminée (fmax).

2. Appareil électronique (100) pour alimenter et contrôler une unité de vibration (1) selon la revendication 1, dans lequel ledit bloc de filtrage passe-bande électronique (3) comprend :
- une partie de circuit d'entrée (F1) incluant une première borne d'entrée (50) et une deuxième borne d'entrée (51) aptes à recevoir le premier signal d'alimentation de tension (S2) ;
- une partie de circuit de sortie (F2) incluant une première (52) et une seconde (53) bornes de sortie aptes à fournir le signal d'alimentation de tension filtré (S3) ;
- un circuit transformateur (T) configuré pour relier la première partie de circuit (F1) et la seconde partie de circuit (F2) l'une à l'autre.

3. Appareil électronique (100) pour alimenter et contrôler une unité de vibration (1) selon la revendication 2, dans lequel ladite première partie de circuit (F1) du bloc de filtrage électronique (3) comprend :
- un premier enroulement inductif (L1) et un second enroulement inductif (L3), égaux l'un à l'autre, ledit premier enroulement (L1) étant relié entre la première borne d'entrée (50) et un premier nœud (54) de la première partie de circuit, ledit second enroulement (L3) étant relié entre la deuxième borne d'entrée (51) et un second nœud (55) de la première partie de circuit, lesdits premier et second enroulements inductifs formant les enroulements primaires d'un premier transformateur (T1) ;
- un premier condensateur (C1) relié entre ledit premier nœud d'entrée (54) et ledit second nœud d'entrée (55) ;
- un enroulement inductif supplémentaire (L2) relié entre ledit premier nœud d'entrée (54) et une première borne (56) respective du transformateur (T), ledit enroulement inductif supplémentaire formant l'enroulement secondaire du premier transformateur (T1) ;
- un deuxième condensateur (C2) relié entre le second nœud d'entrée (55) de la première partie de circuit (F1) et une deuxième borne (57) respective du transformateur (T).

4. Appareil électronique (100) pour alimenter et contrôler une unité de vibration (1) selon la revendication 2, dans lequel ladite seconde partie de circuit (F2) du bloc de filtrage électronique (3) comprend :
- un troisième condensateur (C3) relié entre une troisième borne (58) respective et une quatrième borne (59) respective du transformateur (T), ladite troisième borne étant court-circuitée avec la première borne de sortie (52) du bloc de filtrage électronique (3), ladite quatrième borne étant reliée à la seconde borne de sortie (53) à travers une résistance de dérivation (Rv) ;
- une première (R1) et une seconde (R2) résistances reliées l'une à l'autre en série entre lesdites première et seconde bornes de sortie.

5. Appareil électronique (100) pour alimenter et contrôler une unité de vibration (1) selon la revendication 4, dans lequel ledit au moins un signal de rétroaction comprend un signal de tension de rétroaction (Sv) et un signal de courant de rétroaction (Si), le signal de tension de rétroaction étant pris à un nœud intermédiaire (60) entre lesdites première (R1) et seconde (R2) résistances, le signal de courant de rétroaction étant pris à la quatrième borne (59) du transformateur (T).

6. Appareil électronique (100) pour alimenter et contrôler une unité de vibration (1) selon la revendication 1, dans lequel ladite unité de contrôle électronique (10) comprend :
- un convertisseur analogique-numérique ADC (11) configuré pour convertir ledit au moins un signal de rétroaction (Sv, Si) du type analogique en un signal de rétroaction numérique (Sdv, Sdi) respectif ;
- un microprocesseur DSP (12) configuré pour traiter ledit signal de rétroaction numérique (Sdv, Sdi) pour générer un signal de tension efficace (Vrms) et des signaux supplémentaires (Z, ϕ) représentatifs d'une impédance et d'une phase relative entre la tension et le courant fournis à l'unité de vibration (1) ;
- un bloc PID flou (13) configuré pour recevoir ledit signal de tension efficace (Vrms) et lesdits signaux supplémentaires (Z, ϕ) à l'entrée pour ordonner la génération du signal de contrôle de tension (S1) ;
- un bloc synthétiseur numérique DDS (14) configuré pour générer ledit signal de contrôle de tension (S1) sur la base d'un ordre reçu depuis ledit bloc PID flou (13).

7. Appareil électronique (100) pour alimenter et contrôler une unité de vibration (1) selon la revendication 6, dans lequel ledit bloc synthétiseur numérique DDS (14) comprend un premier bloc synthétiseur (DDS1) et un second bloc synthétiseur (DDS2) configurés pour générer respectivement un premier signal d'onde carrée (Q1) et un second signal d'onde carrée (Q2) sur la base d'une même valeur de fréquence (f) et d'un premier signal de phase (ϕ1) et d'un second signal de phase (ϕ2) respectifs reçus à l'entrée, lesdits premier (Q1) et second (Q2) signaux d'onde carrée étant fournis au bloc électrique onduleur (2).

8. Appareil électronique (100) pour alimenter et contrôler une unité de vibration (1) selon la revendication 7, dans lequel ladite valeur de fréquence (f) est représentative de la fréquence d'excitation de l'unité de vibration (1), une différence entre les premier (ϕ1) et second (ϕ2) signaux de phase est représentative d'une tension de fonctionnement de l'unité de vibration (1).

9. Appareil électronique (100) pour alimenter et contrôler une unité de vibration (1) selon la revendication 1, dans lequel ledit bloc électrique onduleur (2) est du type à pont en H et comprend une partie d'alimentation (30) de l'onduleur à pont en H et une partie de puissance (40).

10. Appareil électronique (100) pour alimenter et contrôler une unité de vibration (1) selon la revendication 9, dans lequel ladite partie de puissance (40) du bloc onduleur à pont en H comprend :
- une première branche d'onduleur (B1) comprenant un premier (M1) et un deuxième (M2) MOSFET de puissance ;
- une seconde branche d'onduleur (B2) comprenant un troisième (M3) et un quatrième (M4) MOSFET de puissance,
lesdits premier (M1) et troisième (M3) MOSFET de puissance étant reliés entre une borne d'alimentation électrique au potentiel d'alimentation électrique (Vcc) en courant continu et respectivement une première (OUT1) et une seconde (OUT2) bornes de sortie de l'onduleur à pont en H ;
lesdits deuxième (M2) et quatrième (M4) MOSFET de puissance étant reliés entre lesdites première (OUT1) et seconde (OUT2) bornes de sortie de l'onduleur à pont en H et une borne au potentiel de masse (GND) à travers respectivement une première (Rv1) et une seconde (Rv2) résistances étalonnées,
lesdites première (OUT1) et seconde (OUT2) bornes de sortie de l'onduleur à pont en H étant reliées au bloc de filtrage électronique (3).

11. Appareil électronique (100) pour alimenter et contrôler une unité de vibration (1) selon la revendication 10, dans lequel chaque borne de grille desdits premier (M1), deuxième (M2), troisième (M3) et quatrième (M4) MOSFET de puissance est reliée à une borne d'entrée (G1, G2, G3, G4) respective de l'onduleur à pont en H par l'interposition d'un élément de circuit d'isolation (EI1, EI2, EI3, EI4).

12. Appareil électronique (100) pour alimenter et contrôler une unité de vibration (1) selon la revendication 10, dans lequel ladite partie de puissance (40) du bloc onduleur à pont en H comprend en outre un circuit numérique (PT) pour la détection de courant dans lesdites première (B1) et seconde (B2) branches avec chaque cycle d'onde unique et pour la protection contre les surintensités.

13. Appareil électronique (100) pour alimenter et contrôler une unité de vibration (1) selon la revendication 6, dans lequel ledit bloc PID flou (13) comprend :
- un premier bloc PID flou (13') pour contrôler la tension du signal d'alimentation (S3), apte à transformer, au moyen d'un premier bloc contrôleur flou (35'), ledit signal de tension efficace (Vrms) en une première triade de paramètres (Kpv, Kiv, Kdv) qui est fournie en tant qu'une référence pour un premier bloc PIDvrms (36') ;
- un second bloc PID flou (13"), pour contrôler la fréquence, apte à transformer, au moyen d'un second bloc contrôleur flou (35"), lesdits signaux supplémentaires (Z, ϕ) en une seconde triade de paramètres (Kpf, Kif, Kdf) qui est fournie en tant qu'une référence pour un second bloc PID_{f} (36").

14. Appareil électronique (100) pour alimenter et contrôler une unité de vibration (1) selon la revendication 13, dans lequel :
ledit premier bloc PID flou (13') est configuré pour comparer un premier signal d'entrée (r') représentatif d'une valeur de tension de référence à la valeur de tension efficace (Vrms) pour générer un premier signal d'erreur (e') à fournir en tant qu'une entrée à la fois au premier bloc contrôleur flou (35') et au premier bloc PIDvrms (36'), les sorties de tels blocs étant envoyées au bloc synthétiseur numérique DDS (14) au moyen d'un premier multiplexeur Mux' (37') ;
ledit second bloc PID flou (13") est configuré pour comparer un second signal d'entrée (r") représentatif d'une valeur de phase de référence à la valeur de phase relative (ϕ) entre la tension et le courant pour générer un second signal d'erreur (e") à fournir à en tant qu'une entrée à la fois au second bloc contrôleur flou (35") et au second bloc PID_{f} (36"), les sorties de tels blocs étant envoyées au bloc synthétiseur numérique DDS (14) à travers un second multiplexeur Mux" (37").

15. Appareil électronique (100) pour alimenter et contrôler une unité de vibration (1) selon la revendication 1, comprenant en outre un bloc (15) pour convertir une tension de courant alternatif en courant continu, qui est configuré pour générer ledit potentiel d'alimentation électrique (Vcc) en courant continu à partir d'un potentiel d'alimentation électrique de secteur (Vac) en courant alternatif, ledit bloc de conversion de tension (15) comprenant un bloc correcteur de facteur de puissance PFC CA/CC du type amplificateur simple fonctionnant en mode de conduction continue, CCM.

16. Machine de souder à ultrasons comprenant :
- une unité de vibration (1) configurée pour générer des vibrations à une fréquence ultrasonore ;
- un appareil électronique (100) pour alimenter et contrôler ladite unité de vibration selon l'une quelconque des revendications 1 à 15.
